# EUROPÄISCHE PATENTANMELDUNG

(11) **EP 2 756 784 A1**
(43) Veröffentlichungstag der Anmeldung: **23.07.2014**
(21) Anmeldenummer: 13196319.1
(22) Anmeldetag: 09.12.2013
(51) Int. Cl.: A47J 31/06, A47J 31/44

(54) **Brühkopf für eine Espressokaffeemaschine**

(30) Priorität: 17.01.2013 DE 102013000701
(71) Anmelder: ECM Espresso Coffee Machines Manufacture GmbH, 69151 Neckargemünd (DE)
(72) Erfinder: Hauck, Michael, 69151 Neckargemünd (DE)
(74) Vertreter: Beyer, Carsten

(57) **Zusammenfassung**

Vorgeschlagen wird ein Brühkopf (102) für eine Espressokaffeemaschine, mit einem rückseitigen Anschluss (104) zur mittelbaren oder unmittelbaren Verbindung mit einem Heißwasserreservoir, und mit einem vorderseitigen Anschluss (106) zum Anschließen eines Siebträgers mit Kaffeepulver, und mit einem sich zwischen den Anschlüssen (104, 106) erstreckenden Durchgang (108) zur Durchleitung von Heißwasser zum Siebträger, wobei der Durchgang (108) so ausgestaltet ist, dass eine separat vom Brühkopf (102) gefertigte Druckleitung (112) zur Durchleitung von Heißwasser in den Durchgang (108) einbringbar ist. Ferner sind eine Brühgruppe sowie eine Espressokaffeemaschine angegeben, welche jeweils einen solchen Brühkopf (102) aufweisen. Im Rahmen der Erfindung ist ein Brühkopf (102) realisierbar, welcher die Vorteile verschiedener Werkstoffe hinsichtlich unterschiedlicher Anforderungen beim Brühen von Espressokaffee miteinander zu vereinen vermag.

## Beschreibung

Die vorliegende Erfindung betrifft einen Brühkopf für eine Espressokaffeemaschine, mit einem rückseitigen Anschluss zur mittelbaren oder unmittelbaren Verbindung mit einem Heißwasserreservoir, und mit einem vorderseitigen Anschluss zum Anschließen eines Siebträgers mit Kaffeepulver, und mit einem sich zwischen den Anschlüssen erstreckenden Durchgang zur Durchleitung von Heißwasser zum Siebträger. Des Weiteren betrifft die Erfindung eine Brühgruppe mit einem genannten Brühkopf sowie eine Espressokaffeemaschine mit einem genannten Brühkopf.

Brühköpfe der in Rede stehenden Art sind aus Espressokaffeemaschinen bekannt und werden im Allgemeinen als Teil der sog. Brühgruppe angesehen. Der Brühkopf ist dabei i.A. ein Bauteil, in dessen vorderseitigen Anschluss bzw. Flansch der Siebträger mit dem gemahlenen Kaffeepulver eingehängt bzw. angeschlossen oder angeflanscht wird. Dazu dient üblicherweise ein zwischen dem vorderseitigen Anschluss des Brühkopfs und dem Siebträger ausgebildeter Bajonettverschluss. Der rückseitige Anschluss des Brühkopfs ist mit der restlichen Brühgruppe bzw. mittelbar oder unmittelbar mit dem Heißwasserreservoir verbunden. Dabei wird als Heißwasserreservoir oftmals eine beheizbare Vorrichtung verwendet, welche als "Kessel" bezeichnet werden kann.

Der Brühkopf kann dabei auch als "Grundkörper einer Brühgruppe" bezeichnet werden, wie z.B. in der auf die vorliegende Anmelderin zurückgehenden Druckschrift DE 10 2010 013 066 A1. Diese Schrift zeigt ebenfalls beispielhaft eine vorbekannte Brühgruppe. Ebenso ist unter Umständen geläufig, dass das hier und im Folgenden als "Brühkopf" bezeichnete Bauteil auch unmittelbar als "Brühgruppe" bezeichnet wird. Sämtliche denkbaren Abwandlungen in Bezug auf die Bezeichnung dieses oder anderer Bauteile führen jedoch nicht zu einem Abweichen vom Rahmen der vorliegenden Erfindung, wie sie im Folgenden beschrieben wird.

Die den Brühkopf umfassende Brühgruppe ist bei bekannten Espressokaffeemaschinen ein Bauteil, durch das der Brühprozess für die Kaffeezubereitung erfolgt. Dabei wird Heißwasser aus einem Heißwasserreservoir, insbesondere einem Kessel, durch die Brühgruppe zu dem bereitgestellten Kaffeepulver geleitet. Insofern kann die Brühgruppe als Übergang zwischen dem Heißwasserreservoir und dem Kaffeepulver aufgefasst werden. Mittels der Brühgruppe kann das Heißwasser in der gewünschten Menge und mit dem gewünschten Wasserdruck zum Kaffeepulver geführt werden. An ein Heißwasserreservoir können dabei mehrere Brühgruppen angeschlossen sein.

Der Brühkopf, in den der Siebträger eingesetzt und über den Heißwasser zum Kaffeepulver geleitet wird, muss in aller Regel temperiert werden, bspw. durch eine von der Durchleitung von Heißwasser zum Brühen separate Kreisführung von Heißwasser aus dem Heißwasserreservoir durch den Brühkopf. Andernfalls würde das zum Brühen vorgesehene, durch den Brühkopf geleitete Heißwasser auf dem Weg zum Kaffeepulver viel zu sehr abkühlen.

So sind aus dem Stand der Technik massive, oft aus mehreren Kilogramm verchromtem Messing gefertigte Brühköpfe bekannt. Diese Brühköpfe lassen sich aufgrund der günstigen Werkstoffeigenschaften besonders gut fertigen (bspw. durch Gießen oder Schmieden) und gut durch spanabhebende Verfahren nachbearbeiten. Des Weiteren zeigt Messing eine günstige, vergleichsweise hohe Wärmeleitfähigkeit. Schließlich werden solche verchromten Brühköpfe aus Messing wegen ihrer hochwertigen Optik und ansprechenden Formgebung besonders bevorzugt. Ein bekanntes Beispiel eines solchen Brühkopfes und einer entsprechenden Brühgruppe bildet das seit 1961 bekannte Modell "E61". Bei diesem bekannten Brühkopf ist die Durchleitung von Heißwasser zum Siebträger realisiert, indem durch miteinander korrespondierende Bohrungen ein Durchgang durch den Brühkopf geschaffen wird, der zur Durchleitung von Heißwasser dient.

Dies geht jedoch auch mit Nachteilen einher. Messing enthält neben Kupfer und Zink im Allgemeinen noch die Legierungsmetalle Blei und/oder Nickel. Ein Übergang von ggf. gesundheitlich bedenklichen Schwermetallionen in das Brühwasser und folglich in den gebrühten Kaffee kann daher nicht vollständig ausgeschlossen werden. Des Weiteren kann bei Werkstücken aus Messing (je nach Legierungszusammensetzung mehr oder weniger) Korrosion auftreten. Aufgrund der Weichheit des Materials verschleißt Messing beim Gebrauch oder bei der Reinigung (besonders mit scharfkantigen Werkzeugen) rasch. Schließlich reagiert Messing äußerst empfindlich auf entkalkende Substanzen oder hochwirksame Reinigungsmittel, die Entfernung von Kaffeerückständen (insb. Kaffeefett) aus dem Brühkopf ist nur schwer möglich oder kann zur Beschädigung des Werkstoffs führen.

Es könnte daher wünschenswert erscheinen, alternativ eine Espressokaffeemaschine mit einem Brühkopf bereitzustellen, der bspw. vollständig aus Edelstahl besteht. Solche Maschinen sind ebenfalls aus dem Stand der Technik bekannt. Allerdings ist die Formgebung und Bearbeitung von Edelstahl deutlich komplizierter als bspw. von Messing. Des Weiteren ist ein aus Edelstahlblechen zusammengefügter Brühkopf aufgrund der normalerweise geringeren Masse im Vergleich zu o.g. massiven Brühköpfen aus Messing und/oder der erheblich schlechteren Wärmeleitfähigkeit von Edelstahl schwieriger zu temperieren. Das Beherrschen dieser Problematik und der erhöhte Aufwand für die Herstellung des Brühkopfes verteuern die Maschine erheblich. Des Weiteren kann ein solcher Brühkopf aus Edelstahl i.A. nicht die oben angeführte Optik und Formgebung eines herkömmlichen Brühkopfs aus massivem Messing aufweisen.

Der vorliegenden Erfindung liegt daher die Aufgabe zugrunde, zumindest einen der oben aufgeführten Nachteile zu lindern.

Des Weiteren liegt der Erfindung die Aufgabe zugrunde, einen Beitrag zur Realisierung des Brühens von Espressokaffee ohne die Abgabe unerwünschter Inhaltsstoffe bei gleichzeitig zuverlässiger Temperierbarkeit des Brühkopfs zu leisten.

Des Weiteren liegt der Erfindung die Aufgabe zugrunde, einen Beitrag zur verbesserten Handhabung und Pflege von Espressokaffeemaschinen bei gleichzeitig ansprechender Optik und Formgebung der Maschine zu leisten.

Einen Beitrag zur Lösung mindestens einer der vorstehend genannten Aufgaben leistet ein Brühkopf für eine Espressokaffeemaschine der eingangs genannten Art, welcher durch die kennzeichnenden Merkmale des Anspruchs 1 weitergebildet ist. Danach ist der Durchgang zur Durchleitung von Heißwasser zum Siebträger so ausgestaltet, dass eine separat vom Brühkopf gefertigte Druckleitung zur Durchleitung von Heißwasser in den Durchgang einbringbar ist.

Vorteilhafte Ausgestaltungen und Weiterbildungen des erfindungsgemäßen Brühkopfs ergeben sich aus den hierzu nachgeordneten Ansprüchen.

Einen Beitrag zur Lösung mindestens einer der vorstehend genannten Aufgaben leisten ferner eine Brühgruppe mit den Merkmalen des Anspruchs 9 sowie eine Espressokaffeemaschine mit den Merkmalen des Anspruchs 10, welche jeweils einen erfindungsgemäßen Brühkopf aufweisen.

Im Rahmen der vorliegenden Erfindung ist zunächst erkannt worden, dass bisher bekannte Brühköpfe hinsichtlich der Werkstoffauswahl problematisch sind. Nunmehr ist jedoch in überraschender Weise ein Brühkopf für eine Espressokaffeemaschine realisierbar, welcher die Vorteile verschiedener Werkstoffe hinsichtlich unterschiedlicher Anforderungen miteinander zu vereinen vermag.

So kann der Brühkopf aus einem Werkstoff gefertigt sein, welcher eine bekannt hohe Wärmeleitfähigkeit und/oder eine gute Bearbeitbarkeit und/oder eine bevorzugte Optik aufweist. Nachteile solcher Werkstoffe, welche insbesondere beim direkten Kontakt mit dem Heißwasser zum Brühen auftreten, sind freilich erfindungsgemäß vermeidbar. So ist nämlich unter Abkehr von bekannten Lösungen vorgesehen, dass eine separate Druckleitung zur Durchleitung von Heißwasser zu dem vorderseitigen Anschluss des Brühkopfs in den entsprechend ausgestalteten Durchgang des Brühkopfs einbringbar ist.

Somit lässt sich unter Beibehaltung der Vorteile o.g. Werkstoffe für den Brühkopf eine separate Druckleitung andererseits aus einem Material fertigen, welches besonders dazu geeignet ist, mit dem Heißwasser zum Brühen in Kontakt zu geraten. Dabei kann es sich insbesondere um Werkstoffe handeln, welche nicht zur Abgabe von unerwünschten Fremdstoffen an das Heißwasser neigen, und/oder welche sich einfach reinigen und ggf. dabei auch mit wirkungsvollen Reinigungsmitteln behandeln lassen. Die separate Druckleitung kann dabei aus einem an sich schwierig zu bearbeitendem Material, bspw. aus Edelstahl, bestehen, aus dem nunmehr jedoch nicht mehr ein gesamter Brühkopf, sondern lediglich die Leitung zu fertigen ist. Dies kann bspw. durch einen einfach durchführbaren Drehvorgang erfolgen.

So kann erfindungsgemäß das Brühen von Espressokaffee ohne die Abgabe unerwünschter Inhaltsstoffe an das Heißwasser bei gleichzeitig zuverlässiger Temperierbarkeit des Brühkopfs realisiert werden. Gleichzeitig liefert die Erfindung einen Beitrag zur verbesserten Handhabung und Pflege von Espressokaffeemaschinen bei gleichzeitig ansprechender Optik und Formgebung der Maschine.

In einer besonders bevorzugten ersten Weiterbildung des Erfindungsgedankens ist der sich durch den erfindungsgemäßen Brühkopf erstreckende Durchgang durch eine gerade durch den Brühkopf verlaufende Ausnehmung, insbesondere eine Bohrung, realisiert. Eine solche Ausnehmung lässt sich einerseits besonders einfach fertigen. Zum anderen lässt sich in eine solche Ausnehmung besonders einfach eine separate Druckleitung, insbesondere eine starre Druckleitung, und insbesondere ein vorzugsweise zylindrisches Rohr, einbringen. Alternativ kann eine geeignete Ausnehmung auch durch ein anderes spanabhebendes Verfahren, wie z.B. Fräsen oder Stoßen, realisiert werden. Alternativ hierzu kann eine solche Ausnehmung auch während eines Gießvorgangs durch einen geeignet platzierten Gießkern geschaffen werden. Auch kurvenförmige Ausnehmungen oder dergleichen sind prinzipiell zur Bildung des erfindungsgemäßen Durchgangs denkbar, sofern dies zweckmäßig erscheint. Im letztgenannten Fall, welcher eine alternative Ausführungsform der Erfindung angibt, könnte der Durchgang bspw. eine flexible separate Druckleitung aufnehmen.

Gemäß einer weiteren bevorzugten Ausführungsform der Erfindung ist in den Durchgang des Brühkopfs bereits eine separat vom Brühkopf gefertigte Druckleitung eingebracht. Diese Weiterbildung betrifft mit anderen Worten einen erfindungsgemäßen Brühkopf, in dessen erfindungsgemäß ausgestalteten Durchgang bereits eine separat gefertigte Druckleitung angeordnet ist. In Bezug auf vorteilhafte Ausgestaltungen des Durchgangs und/oder der separat gefertigten Druckleitung wird dabei auf die oben stehenden Ausführungen verwiesen. Als besonders vorteilhaft wird jedoch eine separat gefertigte Druckleitung angesehen, welche als starre Druckleitung, und insbesondere als vorzugsweise zylindrisches Rohr, ausgestaltet ist.

In einer vorteilhaften Weiterbildung der letztgenannten Ausführungsform ist zwischen der Druckleitung und dem Brühkopf zumindest ein Dichtungselement, insbesondere ein O-Ring, angeordnet. So kann einerseits eine Abdichtung eines ggf. zwischen der Innenwand des Durchgangs und der Außenwand der Druckleitung entstehenden Zwischenraums vor dem Eindringen von Heißwasser bewerkstelligt werden. Andererseits kann ein solches Dichtungselement die Festlegung der Druckleitung in dem Durchgang sicherstellen oder unterstützen, bspw. durch eine Quetschwirkung oder durch die Ausbildung einer formschlüssigen Verbindung miteinander korrespondierender Ausnehmungen (insbesondere Nuten) im Durchgang und in der Druckleitung. Besonders bei dem Einbringen der Druckleitung in den Durchgang kann ein genanntes Dichtungselement das Herausfallen der Druckleitung verhindern, nämlich auf eine der beschriebenen Arten.

In einer besonders vorteilhaften Ausgestaltung der Erfindung ist der Brühkopf aus einem ersten Material, insbesondere aus Messing, und insbesondere aus verchromtem Messing, gefertigt, während die Druckleitung aus einem zweiten Material, insbesondere aus Stahl oder Edelstahl, gefertigt ist. Diese Ausgestaltung bildet konkret die Idee weiter, innerhalb des erfindungsgemäßen Brühkopfs die vorteilhaften Eigenschaften verschiedener Werkstoffe zu kombinieren, bzw. die nachteiligen Eigenschaften bestimmter Werkstoffe abzumildern oder sogar gänzlich zu eliminieren. So kann der Brühkopf aus einem ersten Material gefertigt sein, welches eine gute Wärmeleitfähigkeit und/oder eine gute Bearbeitbarkeit und/oder ein ansprechendes Äußeres aufweist. Dabei kann Messing, insbesondere verchromtes Messing, bevorzugt sein. Auf der anderen Seite kann eine separat gefertigte Druckleitung vorgesehen werden, welche sich in Bezug auf den direkten Kontakt mit dem Heißwasser und/oder eine beträchtliche Robustheit und/oder eine vorteilhafte Reinigungsmöglichkeit besonders eignet. Dabei kann Stahl, insbesondere Edelstahl, bevorzugt sein. Edelstahl neigt nicht zur Abgabe unerwünschter Fremdstoffe an das Heißwasser, widersteht selbst scharfen Reinigungsmitteln und ist in mechanischer Hinsicht sehr viel stabiler als Messing. Dies erweist sich beim Dauergebrauch der Maschine genau wie beim mechanischen Einwirken während eines Reinigungsvorgangs als vorteilhaft.

Bei einer weiteren vorteilhaften Weiterbildung des erfindungsgemäßen Brühkopfs ist bzw. sind im Bereich des vorderseitigen Anschlusses in den Brühkopf eine Duschplatte, insbesondere aus Stahl oder Edelstahl, und/oder ein Sprühverteiler, insbesondere aus Stahl oder Edelstahl, eingebracht. So kann ein Brühkopf realisiert werden, in dem durchströmendes Heißwasser keinem direkten Kontakt zu Werkstoffen ausgesetzt wird, welche in nachteiliger Weise auf das Heißwasser einwirken könnten, wie z.B. Messing.

In einer weiteren Ausgestaltung des Erfindungsgedankens ist innerhalb einer Espressokaffeemaschine auch die restliche Brühgruppe (d.h. insbesondere Rohre und Ventile) und das Heißwasserreservoir (z.B. ein Kessel) ebenfalls nicht aus Werkstoff wie Messing, sondern vorzugsweise aus Stahl oder Edelstahl gefertigt. So lässt sich eine Espressokaffeemaschine bereitstellen, in der Heißwasser an keiner Stelle unmittelbar mit Werkstoffen in Berührung kommt, welche in oben beschriebener nachteiliger Weise auf das Wasser einwirken könnten.

In einer weiteren bevorzugten Ausgestaltung des erfindungsgemäßen Brühkopfs ist durch die Festlegung eines Adapters, eines Anschlussstücks, eines Ventils oder dergleichen am Brühkopf im Bereich des rückseitigen Anschlusses gleichzeitig die Druckleitung in diesem Bereich am Brühkopf festlegbar. So lässt sich die separat gefertigte Druckleitung in diesem Bereich des Brühkopfs ohne nennenswerten zusätzlichen konstruktiven Aufwand befestigen, da üblicherweise zumindest eines der oben aufgezählten Bauteile sowieso an dem Brühkopf zu befestigen ist.

Zusätzlich oder alternativ hierzu kann durch die Festlegung eines Sprühverteilers oder dergleichen am Brühkopf im Bereich des vorderseitigen Anschlusses gleichzeitig die Druckleitung in diesem Bereich am Brühkopf festlegbar sein. Auch im Zuge dieser Ausführung der Erfindung kann zusätzlicher konstruktiver Aufwand minimiert oder vermieden werden.

Ferner wird eine Brühgruppe vorgeschlagen, welche einen erfindungsgemäßen Brühkopf aufweist. Des Weiteren ist eine Espressokaffeemaschine angegeben, welche einen erfindungsgemäßen Brühkopf oder eine erfindungsgemäße Brühgruppe aufweist.

Die Vorteile der erfindungsgemäßen Brühgruppe bzw. der erfindungsgemäßen Espressokaffeemaschine gegenüber bekannten Vorrichtungen der jeweiligen Gattung ergeben sich dabei bereits aus den obigen Ausführungen zu Wesen und Vorteilen des erfindungsgemäßen Brühkopfs, auf welche zur Vermeidung von Wiederholungen vollumfänglich verwiesen wird.

Des Weiteren ergeben sich durch die obigen Erläuterungen vorteilhafter Ausgestaltungen und Weiterbildungen des erfindungsgemäßen Brühkopfs gleichzeitig auch vorteilhafte Ausgestaltungen und Weiterbildungen der erfindungsgemäßen Brühgruppe bzw. der erfindungsgemäßen Espressokaffeemaschine. Dabei lassen sich Merkmale verschiedener vorteilhafter Ausgestaltungen des Brühkopfs auch innerhalb vorteilhafter Weiterbildungen der Brühgruppe bzw. der Espressokaffeemaschine kombinieren.

Ausführungsbeispiele der Erfindung, welche die Erfindung jedoch nicht auf die gezeigten Beispiele einschränken, sind im Vergleich zu Lösungen gemäß Stand der Technik in der Zeichnung dargestellt und werden im Folgenden näher erläutert. Dabei werden auch im Allgemeinen bevorzugte Ausgestaltungen und Weiterbildungen der Lehre erläutert.

Es zeigen:
- Figur 1: in einer seitlichen Schnittansicht einen aus dem Stand der Technik bekannten Brühkopf,
- Figur 2: in einer seitlichen Schnittansicht ein erstes Ausführungsbeispiel eines erfindungsgemäßen Brühkopfs, und
- Figur 3: ebenfalls in einer seitlichen Schnittansicht ein weiteres Ausführungsbeispiel eines erfindungsgemäßen Brühkopfs, hier mitsamt einer in den Durchgang eingebrachten, separat vom Brühkopf gefertigten Druckleitung.

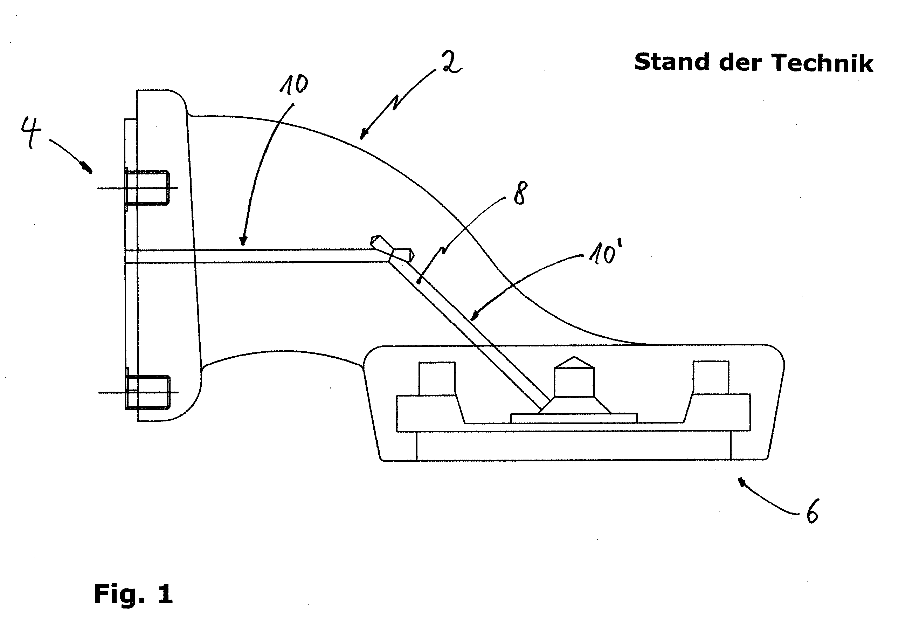

**Fig. 1** zeigt in einer seitlichen Schnittansicht einen aus dem **Stand der Technik** bekannten Brühkopf 2 für eine Espressokaffeemaschine (hier nicht dargestellt). Der bekannte Brühkopf 2 weist einerseits einen rückseitigen Anschluss 4 zur mittelbaren oder unmittelbaren Verbindung mit einem Heißwasserreservoir (nicht dargestellt) auf. Des Weiteren ist ein vorderseitiger Anschluss 6 zum Anschließen eines Siebträgers mit Kaffeepulver (nicht dargestellt) vorgesehen. Schließlich erstreckt zwischen den Anschlüssen 4, 6 ein Durchgang 8 zur Durchleitung von Heißwasser zu einem am vorderseitigen Anschluss 6 angeschlossenen Siebträger.

Der bekannte Brühkopf 2 ist aus massivem Vollmaterial gefertigt, dessen Werkstoff üblicherweise eine besonders gute Wärmeleitfähigkeit und/oder mechanische Bearbeitbarkeit und/oder eine besonders ansprechende Optik aufweist. Hier handelt es sich dabei um verchromtes Messing.

Der Durchgang 8 ist innerhalb des Brühkopfs 2 durch zwei miteinander korrespondierende, in einem stumpfen Winkel zueinander angeordnete Bohrungen 10 und 10' gebildet. So dient der Durchgang 8 gleichzeitig zur Durchleitung von Heißwasser zu einem Siebträger. Das aus einem Heißwasserreservoir geförderte Heißwasser gelangt so zwangsläufig in direkten Kontakt mit dem Werkstoff des Brühkopfs 2. Die Abgabe unerwünschter Fremdstoffe an das Heißwasser, insbesondere von Schwermetallionen aus Messingwerkstoffen, kann so nicht sicher ausgeschlossen werden.

Des Weiteren ist der bekannte Brühkopf 2 aufgrund seines vergleichsweise weichen Werkstoffs anfällig gegen mechanische Beanspruchungen beim Betrieb oder bei der Reinigung. Zusätzlich tolerieren derartige Werkstoffe, insbesondere Messing, üblicherweise kaum den Einsatz hochwirksamer Reinigungssubstanzen, und zwar insbesondere nicht den Einsatz von säurehaltigen Reinigungsmitteln.

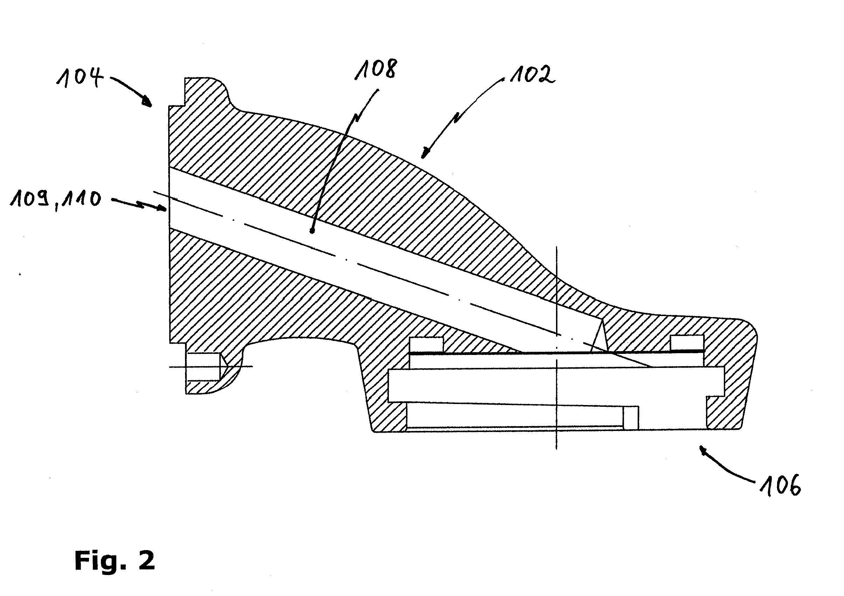

**Fig. 2** zeigt in einer seitlichen Schnittansicht ein erstes Ausführungsbeispiel eines erfindungsgemäßen Brühkopfs 102 für eine Espressokaffeemaschine (hier nicht dargestellt). Der vorgeschlagene Brühkopf 102 weist zunächst wie der gemäß Fig. 1 vorbekannte Brühkopf 2 einen rückseitigen Anschluss 104 zur mittelbaren oder unmittelbaren Verbindung mit einem Heißwasserreservoir (nicht dargestellt) auf. Des Weiteren ist ein ebenfalls ein vorderseitiger Anschluss 106 zum Anschließen eines Siebträgers mit Kaffeepulver (nicht dargestellt) vorgesehen. Schließlich erstreckt zwischen den Anschlüssen 104, 106 ein Durchgang 108 zur Durchleitung von Heißwasser zu einem am vorderseitigen Anschluss 106 angeschlossenen Siebträger.

Erfindungsgemäß ist der Durchgang 108 nunmehr so ausgestaltet, dass eine separat vom Brühkopf 102 gefertigte Druckleitung (in Fig. 2 nicht dargestellt) zur Durchleitung von Heißwasser in den Durchgang 108 einbringbar ist. Hierzu ist bei dem Ausführungsbeispiel nach Fig. 2 der Durchgang 108 im Konkreten durch eine gerade durch den Brühkopf 102 verlaufende Ausnehmung 109 realisiert. Hier ist die Ausnehmung 109 durch eine gerade ausgeführte Bohrung 110 ausgebildet worden.

Der erfindungsgemäße Brühkopf 102 kann wie der bekannte Brühkopf 2 gemäß Fig. 1 aus massivem Vollmaterial gefertigt sein, dessen Werkstoff eine besonders gute Wärmeleitfähigkeit und/oder mechanische Bearbeitbarkeit und/oder eine besonders ansprechende Optik aufweist. Die bekannten Vorteile solcher Werkstoffe sind damit weiterhin nutzbar. Hier ist der Brühkopf 102 aus verchromtem Messing hergestellt.

Unter Abkehr vom Stand der Technik ist nun jedoch in den Durchgang 108 eine separat vom Brühkopf 102 gefertigte Druckleitung zur Durchleitung von Heißwasser einbringbar. Somit lässt sich unter Beibehaltung der Vorteile o.g. Werkstoffe für den Brühkopf eine separate Druckleitung andererseits aus einem Material fertigen, welches besonders dazu geeignet ist, mit dem Heißwasser zum Brühen in Kontakt zu geraten. Dabei kann es sich insbesondere um einen robusten Werkstoff handeln, welche nicht zur Abgabe von unerwünschten Fremdstoffen an das Heißwasser neigt, und/oder welcher sich einfach und gründlich, auch mit wirkungsvollen Reinigungsmitteln, reinigen lässt. Besonders bevorzugt ist dabei, die separate Druckleitung aus Edelstahl zu fertigen.

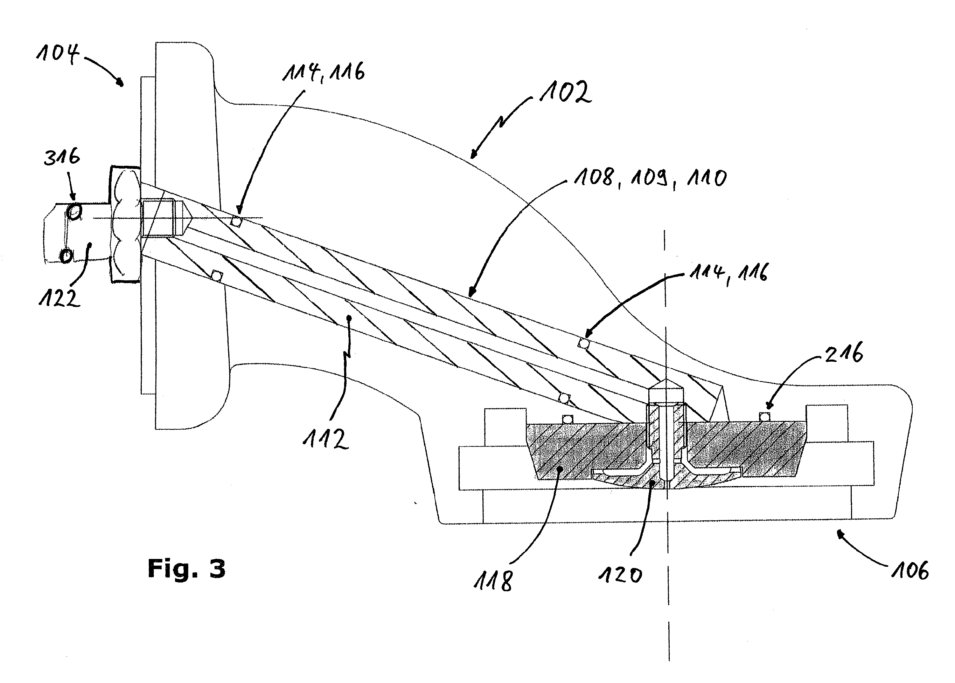

**Fig. 3** zeigt ebenfalls in einer seitlichen Schnittansicht ein weiteres Ausführungsbeispiel eines erfindungsgemäßen Brühkopfs 102, hier allerdings bereits mit einer in den Durchgang 108 eingebrachten, separat vom Brühkopf 102 gefertigten Druckleitung 112.

Der Brühkopf 102 weist wie das Ausführungsbeispiel gem. Fig. 2 einen rückseitigen Anschluss 104 sowie einen vorderseitiger Anschluss 106 auf. Des Weiteren erstreckt sich zwischen den Anschlüssen 104, 106 ein Durchgang 108 zur Durchleitung von Heißwasser. Auf die detaillierten Ausführungen anhand Fig. 2 wird zur Vermeidung von Wiederholungen verwiesen.

Erfindungsgemäß ist der Durchgang 108 so ausgestaltet, dass eine separat vom Brühkopf 102 gefertigte Druckleitung 112 in den Durchgang 108 einbringbar ist. Hierzu ist wie bei dem Ausführungsbeispiel nach Fig. 2 der Durchgang 108 durch eine gerade durch den Brühkopf 102 verlaufende Ausnehmung 109, nämlich durch eine gerade ausgeführte Bohrung 110, ausgebildet worden.

Der Brühkopf 102 besteht wie bei dem Ausführungsbeispiel gem. Fig. 2 aus verchromtem Messing.

In den Durchgang 108 ist bereits eine separat gefertigte Druckleitung 112 eingebracht worden. Diese besteht hier aus einem zylindrischen Rohr aus Edelstahl. Insofern ist der Brühkopf 102 aus einem ersten Material gefertigt, während die Druckleitung 112 aus einem zweiten Material gefertigt ist.

Die Druckleitung 112 dient zur Durchleitung von Heißwasser zu einem Siebträger (nicht dargestellt) am vorderseitigen Anschluss 106 des Brühkopfs 102 und verhindert so den direkten Kontakt des Heißwassers mit dem Messing des Brühkopfs 102. Weitere Vorteile der separat gefertigten Druckleitung 112 sind bereits erläutert worden.

Zwischen der Druckleitung 112 und dem Brühkopf 102 sind zwei Dichtungselemente 114, nämlich jeweils ein O-Ring 116, angeordnet. Die Dichtungselemente 114 sorgen für eine Abdichtung eines ggf. vorhandenen Raums zwischen der Innenwand des Durchgangs 108 und der Außenwand der Druckleitung 112 gegen das Eindringen von Heißwasser. Andererseits unterstützen die Dichtungselemente 114 die Festlegung der Druckleitung 112 in dem Durchgang 108 und verhindern während der Montage ein Herausfallen der Druckleitung 112 aus dem Brühkopf 102, nämlich insbesondere durch eine sich aufgrund einer Quetschung der Dichtelemente 114 aufbauende Reibwirkung.

In das gem. Fig. 3 vorliegende Ausführungsbeispiel des erfindungsgemäßen Brühkopfs 102 sind ferner im Bereich des vorderseitigen Anschlusses 106 eine Duschplatte 118 aus Edelstahl und ein Sprühverteiler 120, welcher ebenfalls aus Edelstahl gefertigt ist, eingebracht. Zwischen der Duschplatte 118 und dem Brühkopf 102 ist ein weiterer O-Ring 216 angeordnet. Die Duschplatte 118 sowie der Sprühverteiler 120 dienen zur Lenkung und Verteilung des Heißwasserstroms auf das aufzubrühende Kaffeepulver. Durch die Fertigung dieser Bauteile aus Edelstahl gelingt es beim vorliegenden Beispiel, innerhalb des gesamten Brühkopfs 102 einen direkten Kontakt zwischen Heißwasser und Messing zu verhindern.

Hierzu ist auch der Adapter 122 am rückseitigen Anschluss 104 des Brühkopfs 102 aus Edelstahl gefertigt. Der Adapter 122 dient zum mittelbaren oder unmittelbaren Anschluss des Brühkopfs 102 an das Heißwasserreservoir. Dazu ist am Adapter 122 ein weiterer O-Ring 316 angeordnet.

Vorteilhaft erscheint es darüber hinaus, die restlichen Teile der Brühgruppe, welche hier nicht dargestellt sind, d.h. Rohre, Ventile und dergleichen (sofern vorhanden), ebenfalls aus Edelstahl zu fertigen. Auch das Heißwasserreservoir (z.B. ein Kessel) kann aus Edelstahl gearbeitet sein. So kann innerhalb der gesamten Espressokaffeemaschine ein Kontakt zwischen Heißwasser und Messing vermieden werden.

Wie im Bereich des rückseitigen Anschlusses 104 zu sehen ist, wird durch die Festlegung des Adapters 122 am Brühkopf 102 im Bereich des rückseitigen Anschlusses 104 gleichzeitig die Druckleitung 112 in diesem Bereich am Brühkopf 112 festgelegt. Dazu wirkt die Verschraubung des Adapters 122 am Brühkopf 102 gleichzeitig auf das rückseitige Ende der Druckleitung 112.

Ferner wird durch die Festlegung des Sprühverteilers 120 und damit auch der Duschplatte 118 am Brühkopf 102 im Bereich des vorderseitigen Anschlusses 106 gleichzeitig die Druckleitung 112 in diesem Bereich am Brühkopf 102 festgelegt. Dazu wirkt die Verschraubung des Sprühverteilers 120 am Brühkopf 102 gleichzeitig auf das vorderseitige Ende der Druckleitung 112.

Die anhand Fig. 2 sowie anhand Fig. 3 erläuterten Ausführungsbeispiele des erfindungsgemäßen Brühkopfs können wahlweise auch in einer erfindungsgemäßen Brühgruppe und/oder in einer erfindungsgemäßen Espressokaffeemaschine Verwendung finden, wobei ebenfalls die bereits anhand des erfindungsgemäßen Brühkopfs beschriebenen Wirkungen und Vorteile erhalten werden.

### Bezugszeichenliste

- 2, 102: Brühkopf
- 4, 104: rückseitiger Anschluss (Brühkopf)
- 6, 106: vorderseitiger Anschluss (Brühkopf)
- 8, 108: Durchgang (Brühkopf)
- 10, 10',: Bohrung
- 109: Ausnehmung (Brühkopf)
- 110: Bohrung
- 112: Druckleitung
- 114: Dichtungselement
- 116: O-Ring (Druckleitung)
- 216: O-Ring (Duschplatte)
- 316: O-Ring (Adapter)
- 118: Duschplatte
- 120: Sprühverteiler
- 122: Adapter

## Patentansprüche

1. Brühkopf (102) für eine Espressokaffeemaschine, mit einem rückseitigen Anschluss (104) zur mittelbaren oder unmittelbaren Verbindung mit einem Heißwasserreservoir, und mit einem vorderseitigen Anschluss (106) zum Anschließen eines Siebträgers mit Kaffeepulver, und mit einem sich zwischen den Anschlüssen (104, 106) erstreckenden Durchgang (108) zur Durchleitung von Heißwasser zum Siebträger,
**dadurch gekennzeichnet, dass** der Durchgang (108) so ausgestaltet ist, dass eine separat vom Brühkopf (102) gefertigte Druckleitung (112) zur Durchleitung von Heißwasser in den Durchgang (108) einbringbar ist.

2. Brühkopf (102) nach Anspruch 1, **dadurch gekennzeichnet, dass** der Durchgang (108) durch eine gerade durch den Brühkopf (102) verlaufende Ausnehmung (109), insbesondere eine Bohrung (110), realisiert ist.

3. Brühkopf (102) nach Anspruch 1 oder 2, **dadurch gekennzeichnet, dass** in den Durchgang (108) des Brühkopfs (102) eine separat vom Brühkopf (102) gefertigte Druckleitung (112) eingebracht ist.

4. Brühkopf (102) nach Anspruch 3, **dadurch gekennzeichnet, dass** zwischen der Druckleitung (112) und dem Brühkopf (102) zumindest ein Dichtungselement (114), insbesondere ein O-Ring (116), angeordnet ist.

5. Brühkopf (102) nach einem der Ansprüche 1 bis 4, **dadurch gekennzeichnet, dass** der Brühkopf (102) aus einem ersten Material, insbesondere Messing, und insbesondere verchromtem Messing, gefertigt ist, und die Druckleitung (112) aus einem zweiten Material, insbesondere Stahl oder Edelstahl, gefertigt ist.

6. Brühkopf (102) nach einem der Ansprüche 1 bis 5, **dadurch gekennzeichnet, dass** im Bereich des vorderseitigen Anschlusses (106) in den Brühkopf (102) eine Duschplatte (118), insbesondere aus Stahl oder Edelstahl, und/oder ein Sprühverteiler (120), insbesondere aus Stahl oder Edelstahl, eingebracht ist bzw. eingebracht sind.

7. Brühkopf (102) nach einem der Ansprüche 1 bis 6, **dadurch gekennzeichnet, dass** durch die Festlegung eines Adapters (122), eines Anschlussstücks, eines Ventils oder dergleichen am Brühkopf (102) im Bereich des rückseitigen Anschlusses (104) gleichzeitig die Druckleitung (112) in diesem Bereich am Brühkopf (102) festlegbar ist.

8. Brühkopf (102) nach einem der Ansprüche 1 bis 7, **dadurch gekennzeichnet, dass** durch die Festlegung eines Sprühverteilers (120) oder dergleichen am Brühkopf (102) im Bereich des vorderseitigen Anschlusses (106) gleichzeitig die Druckleitung (102) in diesem Bereich am Brühkopf (102) festlegbar ist.

9. Brühgruppe, **gekennzeichnet durch** einen Brühkopf (102) nach einem der Ansprüche 1 bis 8.

10. Espressokaffeemaschine, **gekennzeichnet durch** einen Brühkopf (102) nach einem der Ansprüche 1 bis 8 oder **durch** eine Brühgruppe nach Anspruch 9.
